# EUROPÄISCHE PATENTSCHRIFT

(11) **EP 1 183 170 B1**
(45) Veröffentlichungstag und Bekanntmachung des Hinweises auf die Patenterteilung: **03.09.2003**
(21) Anmeldenummer: 00935056.2
(22) Anmeldetag: 18.05.2000
(51) Int. Cl.: B60R 21/16

(54) **AIRBAG FÜR EIN KRAFTFAHRZEUG**
AIRBAG FOR A MOTOR VEHICLE
AIRBAG POUR VEHICULE A MOTEUR

(30) Priorität: 21.05.1999 DE 19923483
(43) Veröffentlichungstag der Anmeldung: 06.03.2002
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38518 Gifhorn (DE)
(74) Vertreter: Liebl, Thomas, Dipl.-Ing.
(86) Internationale Anmeldenummer: EP0004483
(87) Internationale Veröffentlichungsnummer: WO00071390

(56) Entgegenhaltungen:
- EP-A- 0 657 329
- DE-A- 19 631 739
- DE-A- 19 724 625
- DE-A- 19 758 208
- DE-A- 19 805 063
- FR-A- 2 766 142
- US-A- 5 575 497

## Beschreibung

Die Erfindung betrifft einen Airbag für ein Kraftfahrzeug, der mit einem Gasgenerator verbunden ist und an dem zur Erhöhung der passiven Sicherheit Nebenkammern angeordnet sind.

Aus der gattungsgemaßen DE 197 24 625 A1 ist eine Airbageinrichtung für ein Kraftfahrzeug mit einem Gasgenerator und einem durch diesen aufblasbaren Airbag mit einer Hauptkammer bekannt wobei zur Bildung von wenigstens einer Nebenkammer am Airbag dehnbare elastische Gewebeteile angeordnet sind, die nach ihrer Ausdehnung bei Sinken des Gasdrucks im Airbag zumindest einen Teil des Gases in die Hauptkammer zurückdrucken

Konkret ist hier ein Airbag vorgesenen dessen Hülle einen Hüllenabschnitt aufweist, der zur zumindest zeitweisen Bereitstellung eines Zusatzvolumens von dem unter Druck einströmenden Gasmassenstrom elastisch verformbar ist Mit dieser Gestaltung wird ein Berstschutz erreicht und zusatzlich auch die Möglichkeit eröffnet, mittels einer Rückströmung nach elastischer Ruckverformung die sogenannte Standzeit des Airbags durch Aufrechterhaltung eines Mindestdrucks fur einen vorgegebenen Zeitraum zu verlängern. Problematisch bei einem derartigen Aufbau ist. dass das vom Gasgenerator erzeugte heiße Gas das in der Regel warmeempfindliche elastische Material der Nebenkammern, das z. B. durch Kautschuk, feinmaschiges Gewirk, EPDM oder dergleichen aufgebaut ist, beschadigen kann, wodurch die Gefahr besteht, dass die Nebenkammern ihre elastische Funktion und damit die Airbageinrichtung ihre Refill-Funktion verlieren kann

Aus der DE 196 31 739 A1 ist ferner bereits eine Airbageinrichtung für ein Kraftfahrzeug bekannt, die zwei Aufblasvorrichtungen umfasst, wobei eine erste Aufblasvorrichtung in einer Lenksäule vor einer zweiten Aufblasvorrichtung angeordnet ist. Das durch die erste und zweite Aufblasvorrichtung in den Gassack eingeblasene Gas ist jeweils ein Gasgemisch aus einem Kaltgas und einem Heißgas, wobei sowohl die erste als auch die zweite Aufblasvorrichtung jeweils eine Druckkammer mit komprimiertem Gas und einen pyrotechnisch aktivierbaren Gasgenerator aufweist. Sobald der Heißgasgenerator gezündet ist, werden Bauteile verlagert bzw. zerstört zur Freigabe der Ausströmöffnung der Druckkammer, so dass eine Mischung des Kaltgases und des Heißgases in einer Zwischenkammer vor dem Eintritt des Gasgemisches in den Airbag erfolgen kann. Dazu ist eine aufwendige Mechanik vorzusehen, die im konkreten Fall bei der ersten Aufblasvorrichtung durch Schiebeteile und Durchbrüche und im Falle der zweiten Aufblasvorrichtung durch Verformungselemente und Berstfolien ausgebildet ist. Eine Refill-Funktion ist bei einem derartigen Aufbau der Airbageinrichtung nicht vorgesehen. Zudem ist hier in einer weiter nachteiligen Weise sowohl für die Erstbefüllung als auch für die Zweitbefüllung jeweils eine volle Gasmengendosis zur optimalen Befüllung des Airbags erforderlich, was insbesondere im Falle der Sekundärkollision für eine schnelle Zweitbefüllung von gewissem Nachteil ist.

Ferner beschreibt die DE 197 19 151 A1 eine aufblasbare Fahrzeuginsassenschutzvorrichtung und ein Verfahren zum Aufblasen der Vorrichtung, nach dem bei einem Seitencrash eine erste Struktur zwischen dem Thorax bzw. Rumpf eines Fahrzeuginsassen und einem Seitenteil eines Fahrzeugs aufgeblasen und anschließend eine über diese erste Struktur aufblasbare zweite Struktur zwischen dem Kopf des Fahrzeuginsassen und dem Seitenteil des Fahrzeugs entfaltet wird. Dabei sind die beiden Strukturen durch Ventilmittel voneinander getrennt, die eine Rückströmung des Aufblasströmungsmittels von der zweiten in die erste Struktur für eine Zeitperiode verhindern, um einen wirksamen Schutz für den Kopf des Fahrzeuginsassen zu bieten, der zu einem späteren Zeitpunkt mit der zweiten Struktur kollidiert als der Thorax mit der ersten Struktur.

Auch die DE 197 20 586 A1 hat eine Seitenaufprallschutzeinrichtung für einen Fahrzeuginsassen mit einem Airbag zum Gegenstand, der zwei durch eine im wesentlichen waagerechte Trennwand gebildete übereinanderliegende Kammern aufweist, die durch eine Gasdurchtrittsöffnung in der Trennwand miteinander verbunden sind. Um die einwandfreie Funktion beider Kammern auch für den Fall sicherzustellen, dass bei einem Crash während des Aufblasens des Airbags die Gasdurchtrittsöffnung durch Eintauchen des Fahrzeuginsassen in diesen zumindest teilweise verschlossen wird, ist zusätzlich eine weitere, als Überdruckventil wirkende Öffnung in der Trennwand angeordnet. Eine vergleichbare Lösung für einen Mehrkammer-Airbag ist in der EP 0 593 172 B1 beschrieben.

Des weiteren ist aus DE 197 58 208 A1 ein Airbagsystem mit einem durch einen Gasgenerator aufblasbaren inneren und einem äußeren Kissen bekannt, bei dem das äußere Kissen selektiv aufgeblasen wird, wenn die am inneren Kissen angeordneten Luftlöcher durch den in diesem aufgebauten Innendruck geöffnet werden. Damit kann die Luftkissenanordnung auf variable Größen aufgeblasen werden, um einen Fahrzeuginsassen auch dann vor einem Aufprall zu schützen, wenn die Aufblaseinrichtung nur wenig Gas erzeugt.

Mit Ausnahme der beiden erstgenannten Airbags sind bei allen vorbeschriebenen Systemen die Gasübergänge von einem Gassack zu einem zweiten oder von einer Kammer in eine zweite so gestaltet, dass sie in einer Richtung durchströmt werden können und dass die entfalteten Airbags nur bei einer ersten und nicht bei einer weiteren Kollision ihre Rückhaltefunktion sicherstellen. Weiter ist bei all den vorstehend beschriebenen Systemen nachteilig, dass diese keine Maßnahmen zur Reduzierung der Gefahr eines Schrägaufpralls auf den Airbag zur Verfügung stellen.

Die Aufgabe der Erfindung besteht darin, vorgenannte Airbags weiterzuentwickeln, insbesondere im Hinblick auf eine optimierte Befüllung des Airbags bei einer Primär- und Sekundärkollision.

Diese Aufgabe wird gelöst mit den Merkmalen des Anspruchs 1.

Gemäß Anspruch 1 ist der Gasgenerator als Kaltgasgenerator ausgebildet und ist ein zeitlich nach dem Kaltgasgenerator auslösbarer Zusatzgenerator vorgesehen, wobei bei einer Erstbefüllung des Airbags Kaltgas aus dem Kaltgasgenerator in eine Hauptkammer des Airbags einblasbar ist. Nach einem Aufprall eines Fahrzeuginsassen auf den Airbag hält das von den elastisch ausgebildeten Nebenkammern in die Hauptkammer des Airbags zurückgedrängte Kaltgas die Hauptkammerwandungen im wesentlichen gespannt, so dass zur Zweitbefüllung des Airbags im Falle einer Sekundärkollision Gas aus dem Zusatzgenerator mit im Vergleich zur Erstbefüllung geringerer Gasmenge in die Hauptkammer einblasbar ist. vorteilhaft erreicht, dass in einer ersten Stufe bei einer Erstbefüllung des Airbags die in die Hauptkammer des Airbags eingeblasenen Luftmassen so kühl sind, dass das wärmeempfindliche elastische Material der Nebenkammern durch den Gasstrom nicht beschädigt werden kann, so dass die volle Funktionsfähigkeit der Airbageinrichtung und insbesondere der Nebenkammem weiterhin gewährleistet ist. Der nach einem Aufprall eines Fahrzeuginsassen auf den Airbag erfolgende Gasmassenrückstrom aus den elastisch gedehnten Nebenkammern ist, wie Versuche gezeigt haben, groß genug, um die Hauptkammerwandungen des Airbags gespannt zu halten, so dass für eine Nachfüllung mit Heißgas oder Kaltgas aus dem Zusatzgenerator im Vergleich zur Gasmengendosierung der Erstbefüllung nur noch wenig Gasmenge erforderlich ist, so dass bei einer Sekundärkollision mit einem geringen Gasmengenaufwand schnell, d. h. ohne großen Zeitverzug, ein funktionssicherer Aufprallschutz zur Verfügung gestellt werden kann. Zudem ist dieser Aufbau der Airbageinrichtung relativ einfach, d. h. ohne großen Bauteilaufwand herzustellen. Dies ist insbesondere auch dann der Fall, wenn beide Gasgeneratoren in einem Gehäuse untergebracht sind.

Die Nebenkammern können durch seitlich am Airbag und/oder auf der dem Fahrzeuginsassen abgewandten Seite des Airbags, also an den Bereichen des Airbags, mit denen der Fahrzeuginsasse regelmäßig nicht kollidiert und in den Airbag eintaucht, dehnbare elastische Gewebeteile gebildet sein, wobei diese Gewebeteile bei Erreichen des vorbestimmten Druckes unter Energieaufnahme blasenartig entfaltbar sind und bei Absinken des Gasdruckes im Airbag mit der beim Entfalten aufgenommenen Energie das aufgenommene Gas zumindest teilweise in den Airbag zurückdrücken. Damit wird das vom Gasgenerator in den Airbag freigesetzte und teilweise durch den in den Airbag eintauchenden Fahrzeuginsassen aus diesem verdrängte Gas bei einer Entlastung des Airbags in diesen zurückgeführt und steht bei einer Nachfolgekollision zur Verfügung, so dass bei einer solchen auch eine Ruckhaltefunktion erfüllt werden kann. Das in die Nebenkammer verdrängte und dort zwischengespeicherte Gas gelangt vorteilhafterweise auch nicht in den Fahrzeuginnenraum. Die die Nebenkammern bildenden Gewebeteile bestehen dazu aus einem gasundurchlässigen Material, insbesondere einem dehnbaren elastischen Gewebe, das innenseitig mit einer gasundurchlässigen Schicht, z B. mit einer Gummischicht versehen ist. Diese Gummischicht kann zusätzlich Schrumpfeigenschaften aufweisen, derart, dass sie sich bei Wärme ausdehnt und bei Kalte zusammenzieht. Damit wird in vorteilhafter Weise die Refill-Funktion der Airbageinrichtung unterstützt, da bei der Aktivierung derselben Wärme entsteht und anschließend eine Abkühlung erfolgt.

Die Gewebeteile sind bei einer einfachen Ausführung an Öffnungen/ Löchern (Überströmöffnungen) im Airbag angeordnet, durch die das Gas aus dem Airbag unter Aufweitung des dehnbaren Gewebes und damit unter Überwindung dessen Dehnfestigkeit jeweils die Nebenkammer bildet und füllt.

Die Überströmöffnungen können aber auch durch druckabhängige Ventile verschlossen sein, die erst bei einem vorbestimmten Überdruck öffnen, insbesondere durch Membranen, die bei einem vorbestimmten Druck im Airbag platzen.

Grundsätzlich können die elastisch dehnbaren Gewebeteile auf der dem Fahrzeuginsassen abgewandten Seite ausgebildet sein. Besonders vorteilhaft ist es jedoch, wenn die wenigstens eine Nebenkammer im gedehnten, aufgeblasenen Zustand die Hauptkammer des Airbags wenigstens bereichsweise seitlich verbreitert, da hierdurch dann ein insbesondere für den Schrägaufprall vorteilhafter zusätzlicher Schutz möglich ist.

Alternativ zur Anordnung einzelner Gewebeteile als Nebenkammern ist es möglich, diese zu einer einzigen umlaufenden ringförmigen Gewebelage zusammenzufassen, so dass bei einer Aktivierung des Systems eine ringförmige umlaufende Nebenkammer ausbildbar ist. Bei einer ungleichmäßigen Belastung des Airbags durch den eintauchenden Fahrzeuginsassen kann diese Nebenkammer unsymmetrisch ausgebildet werden.

Zur Sicherstellung der Rückhaltefunktion kann insbesondere der Beifahrerairbag vorteilhaft mit zwei Nebenkammern bildenden Gewebeteilen versehen sein, die an den gegenüberliegenden Seiten quer zur Fahrzeuglängsrichtung angeordnet sind. Die Gewebeteile sind so gestaltet, dass sie sich in Fahrzeuglängsrichtung seitlich vom Fahrzeuginsassen entfalten und einen zusätzlichen Schutz bieten, insbesondere bei einem Schrägaufprall. Wenn eine solche Maßnahme nicht erforderlich ist, weil schon ein Seitenairbagsystem im Fahrzeug installiert ist, können die Gewebeteile aber auch so angeordnet sein, dass sich die Nebenkammern im Innern bzw. hinter der Schalttafel entfalten, wobei sie die dort gegebenen, auch unregelmäßigen Freiräume nutzen können.

Vorteilhafterweise sind die dehnbaren Gewebeteile bei Lenkradairbags so ausgelegt, dass sie ein Lenkradumhüllungspolster bilden und so mit relativ wenig Gasvolumen die vom Lenkrad ausgehende Verletzungsgefahr weiter minimiert werden kann.

Die Erfindung wird nachstehend anhand von Ausführungsbeispielen erläutert. In den dazugehörigen Zeichnungen zeigen schematisch:
- Fig. 1:: einen Airbag mit seitlich angeordneten Gewebeteilen,
- Fig. 2:: eine weitere Ausführung eines derartigen Airbags,
- Fig. 3:: einen Lenkradairbag mit lenkradseitig angeordneten Gewebeteilen,
- Fig. 4:: einen Lenkradairbag mit einem ringförmigen Gewebeteil,
- Fig. 5:: einen Beifahrerairbag mit seitlich angeordneten Gewebeteilen und
- Fig. 6:: einen durch zwei Gasgeneratoren aufblasbaren Airbag.

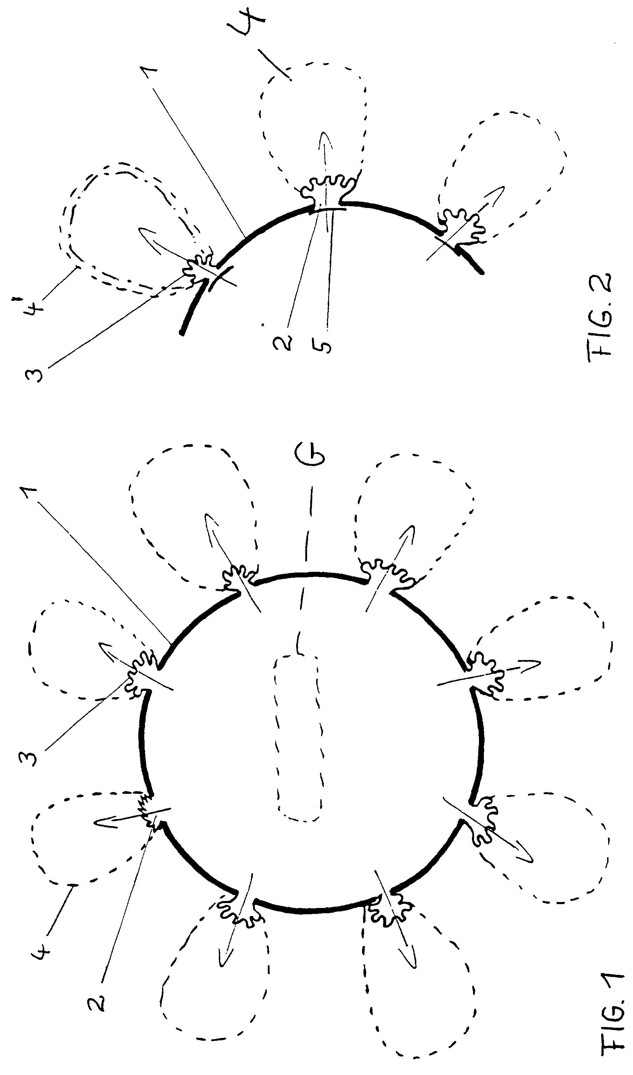

In Fig. 1 ist ein Beifahrerairbag 1 einer Airbageinrichtung für ein Kraftfahrzeug gezeigt, der mit einem schematisch dargestellten Gasgenerator G verbunden ist. An dem Airbag 1 sind an unverschlossenen Überstromöffnungen 2 Taschen 3 aus einem dehnbaren elastischen Gewebe zur Bildung von Nebenkammern 4 (gestrichelt dargestellt) angeordnet. Die Taschen 3 können anstelle eines elastischen Gewebes auch aus einem elastischen Material (Kautschuk, Gummi oder EPDM) gebildet sein. Bevorzugt weisen die Taschen 3 innenseitig z. B. eine Gummibeschichtung des Gewebes auf (schematisch am Beispiel der Tasche 4' durch strichpunktierte Linie angedeutet - siehe Figur 2). Die Darstellung zeigt den entfalteten Airbag nach einer Aktivierung des Systems. Das in diesen freigesetzte Gas hat diesen unter Druckaufbau vollständig entfaltet und wird teilweise aus diesem durch die Überströmöffnungen 2 in die Taschen 3 gedrückt und beginnt diese zu befüllen und zu entfalten. Der Vorgang wird durch einen in den Airbag 1 eintauchenden Fahrzeuginsassen unterstützt, weil dadurch der Gasdruck im Airbag 1 erhöht wird. Die gestrichelt dargestellten gasundurchlässigen Nebenkammern 4 werden unter Energieaufnahme elastisch aufgeweitet. Bei einer nachfolgenden Entlastung des Airbags 1 und der damit verbundenen Druckminderung in diesem wird das in den Nebenkammern 4 vorübergehend gespeicherte Gas durch das energiegeladene und sich wieder zusammenziehende Gewebe teilweise in den Airbag 1 zurückgedrückt und bietet somit bei einer Nachfolgekollision einen Mindestschutz.

Fig. 2 zeigt einen Ausschnitt aus einem Airbag einer vergleichbaren Ausführung. Der Unterschied zur vorstehend beschriebenen Ausführung besteht darin, dass an den Überströmöffnungen 2 druckabhängige Ventile, z. B. in Form von Gewebemembranen 5 angeordnet sind. Diese zerbersten, wenn ein vorbestimmter Druck im Airbag 1 überschritten wird, insbesondere dann, wenn ein Fahrzeuginsasse in den Airbag 1 eintaucht und Gasvolumen verdrängt wird. Die Gasüberströmöffnungen 2 sind danach unverschlossen, so dass das verdrängte Gas nach einer Entlastung des Airbags 1 unbehindert zurückgedrängt werden kann. Die Überströmöffnungen wirken dann als Drossel.

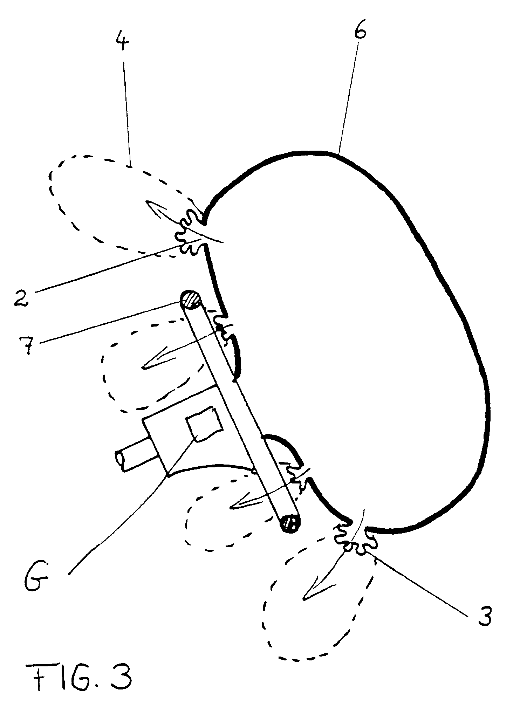

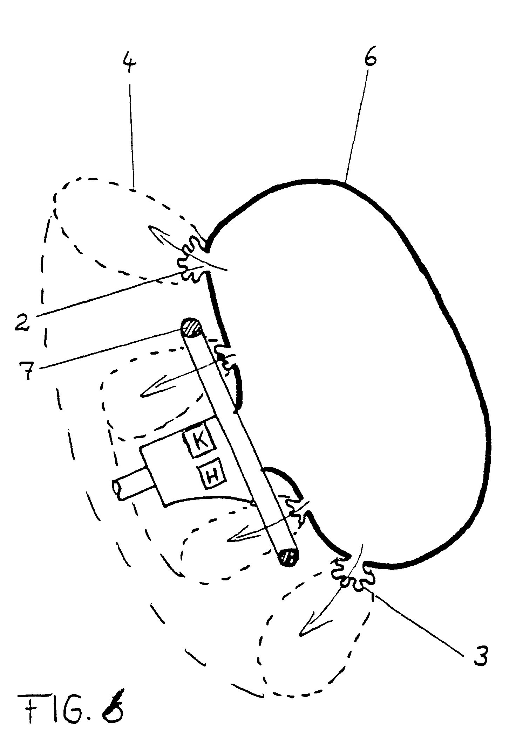

In Fig. 3 ist ein durch den Gasgenerator G befüllbarer Lenkradairbag 6 dargestellt, an dem die Taschen 3 lenkradseitig, also in einer vom Insassen abgewandten Richtung, angeordnet sind. Sie sind auch so verteilt, dass die in radialer Richtung innenliegenden Taschen 3 bei ihrer Entfaltung durch den Lenkradkranz 7 hindurch Nebenkammern 4 ausbilden. Die Überströmöffnungen 2 sind frei. Alternativ können die Nebenkammern 4 das Lenkrad im gedehnten Zustand ringartig oder ringsegmentartig einhüllen und bilden so ein Lenkradumhüllungspolster (siehe auch Figur 6).

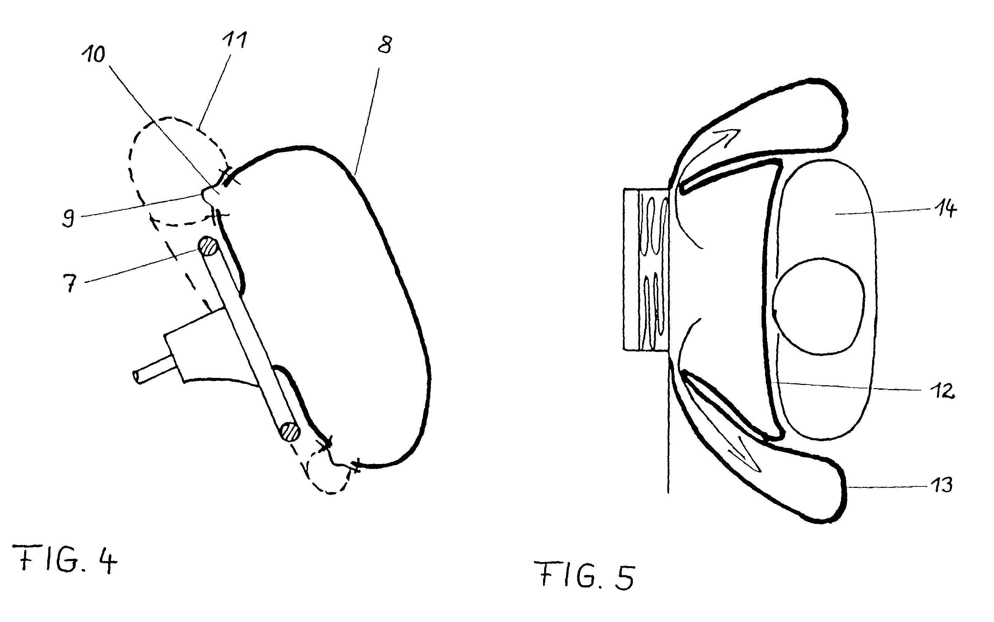

Eine weitere Ausführung einer Airbageinrichtung zeigt Fig. 4. Bei dieser ist ein Lenkradairbag 8 lenkradseitig mit einer umlaufenden ringförmigen Gewebelage 9 über mehreren Überströmöffnungen 10 versehen. Bei einer Befüllung des Lenkradairbags 8 und Übersteigung eines vorbestimmten Gasdruckes in diesem, insbesondere bei Eintauchen eines Fahrzeuginsassen in diesen, wird die Gewebelage 9 zu einer ringförmigen Nebenkammer 11 entfaltet. Bei einer ungleichmäßigen Belastung des Airbags 8 durch den Fahrzeuginsassen, beispielsweise bei einem Schräg- oder auch bei einem seitlichen Frontalaufprall, kann die Nebenkammer 11 auch unsymmetrisch ausgebildet werden (in der Fig. dargestellt).

Figur 5 zeigt einen Beifahrerairbag 12, an dem zwei Nebenkammern 13 aus an den gegenüberliegenden Seiten quer zur Fahrzeuglängsrichtung angeordneten Gewebeteilen, insbesondere durch das Eintauchen des Fahrzeuginsassen 14 in den Airbag 12 entfaltet sind. Die seitlich vom Airbag 12 ausgebildeten Nebenkammern 13 bieten zusätzlich einen verbesserten Schutz bei einem Schrägaufprall. Nach der Entlastung des Beifahrerairbags 12 wird das Gas teilweise auch aus diesen Nebenkammern durch das elastische Gewebe wieder in den Airbag 12 zurückgedrückt.

Erfindungsgemäß wird für die mit elastischen Taschen 3 oder Nebenkammern 11 versehenen Airbags ein sogenannter Kaltgasgenerator K zur Befüllung vorgesehen wie beispielsweise in den Schriften DE 197 00 713, DE 196 21 045, EP 0 449 506, US 5,516,144, EP 0 715 993 oder DE 44 40 247 beschrieben. Die mit derartigen Gasgeneratoren eingefullten Luftmassen sind so kühl, dass das in der Regel wärmeempfindliche elastische Material (Kautschuk, feinmaschiges Gewirk, EPDM oder dergleichen) durch den Gasstrom nicht geschadigt wird und so dem Erschlaffen der Hauptkammer des Airbags durch elastische Selbstrückstellung entgegenwirken kann. Durch erfinderseitige Untersuchungen konnte festgestellt werden, dass dieser Gasmassenrückstrom aus den gedennten elastischen Bereichen groß genug ist, um die Hauptkammerwandungen des Airbags 1, 6, 8 und 12 gespannt zu halten, so dass für eine Nachfüllung mit Heißgas aus einem zweiten Generator H nur noch wenig Gasmasse notwendig ist und damit fur Multikollisionsereignisse mit geringem Aufwand und ohne großen Zeitverzug weiterer Aufpralischutz zur Verfügung gestellt wird. Ein solcher Zusatzgenerator H (siene Figur 6) Kann mit handelsüblichen Heißgas-Treibsätzen bestückt sein wie sie beispielsweise in Fahrzeugen der Anmelderin bereits im Einsatz sind, oder ebenfalls als Kaltgasgenerator (siehe oben) ausgeführt sein.

### BEZUGSZEICHENLISTE

- 1: Airbag
- 2: Überströmöffnung
- 3: Taschen
- 4: Nebenkammern
- 5: Gewebemembran
- 6: Lenkradairbag
- 7: Lenkradkranz
- 8: Lenkradairbag
- 9: Gewebelage
- 10: Überströmöffnung
- 11: Nebenkammer
- 12: Beifahrerairbag
- 13: Nebenkammer
- 14: Fahrzeuginsasse

## Patentansprüche

1. Airbageinrichtung für ein Kraftfahrzeug mit einem Gasgenerator und einem durch diesen aufblasbaren Airbag mit einer Hauptkammer, wobei zur Bildung von wenigstens einer Nebenkammer am Airbag dehnbare elastische Gewebeteile angeordnet sind, die nach ihrer Ausdehnung bei Sinken des Gasdruckes im Airbag zumindest einen Teil des Gases in die Hauptkammer zurückdrücken,
**dadurch gekennzeichnet,**
**dass** der Gasgenerator als Kaltgasgenerator (G, K) ausgebildet ist, und
**dass** ein zeitlich nach dem Kaltgasgenerator (G, K) auslösbarer Zusatzgenerator (H) vorgesehen ist dergestalt,
**dass** bei einer Erstbefüllung des Airbags (1, 6, 8, 12) Kaltgas aus dem Kaltgasgenerator (G, K) in die Hauptkammer des Airbags (1, 6, 8, 12) einblasbar ist, und
**dass** nach einem Aufprall eines Fahrzeuginsassen auf den Airbag (1, 6, 8, 12) das von der wenigstens einen elastisch ausgebildeten Nebenkammer (4, 11, 13) in die Hauptkammer des Airbags (1, 6, 8, 12) zurückgedrängte Kaltgas die Hauptkammerwandungen im wesentlichen gespannt hält, so dass zur Zweitbefüllung des Airbags (1, 6, 8, 12) im Falle einer Sekundärkollision Gas aus dem Zusatzgenerator (H) mit im Vergleich zur Erstbefüllung geringerer Gasmenge in die Hauptkammer einblasbar ist.

2. Airbageinrichtung nach Anspruch 1, **dadurch gekennzeichnet, dass** der Zusatzgenerator (H) als Kaltgas- oder Heißgasgenerator ausgebildet ist.

3. Airbageinrichtung nach Anspruch 1 oder Anspruch 2, **dadurch gekennzeichnet, dass** die dehnbaren Gewebeteile (3, 9) innenseitig eine Beschichtung aus einem gasundurchlässigen elastischen Material, insbesondere eine Gummibeschichtung aufweisen.

4. Airbageinrichtung nach einem der Ansprüche 1 bis 3, **dadurch gekennzeichnet, dass** die Gewebeteile (3, 9) an im Airbag ausgebildeten Überströmöffnungen (2, 10) angeordnet sind.

5. Airbageinrichtung nach Anspruch 4, **dadurch gekennzeichnet, dass** die Überströmöffnungen (2) mit druckabhängigen Ventilen verschlossen sind.

6. Airbageinrichtung nach Anspruch 5, **dadurch gekennzeichnet, dass** die Ventile durch Gas eines vorbestimmten Druckes zerstörbare Membranen (5) sind.

7. Airbageinrichtung, insbesondere nach einem der Ansprüche 1 bis 6, **dadurch gekennzeichnet, dass** die wenigstens eine Nebenkammer (4, 11, 13) im gedehnten, aufgeblasenen Zustand die Hauptkammer des Airbags (1, 6, 8, 12) wenigstens abschnittweise seitlich verbreitert.

8. Airbageinrichtung nach einem der Ansprüche 1 bis 7, **dadurch gekennzeichnet, dass** die Gewebeteile zu einer symmetrisch oder unsymmetrisch zumindest abschnittweise umlaufenden ringförmigen Gewebelage (9) zusammengefasst sind, die durch mindestens eine Überströmöffnung (10) mit dem Airbag (8) verbunden ist.

9. Airbageinrichtung nach einem der Ansprüche 1 bis 7, **dadurch gekennzeichnet, dass** der Beifahrerairbag (12) zwei Gewebeteile aufweist, die an den quer zur Fahrzeuglängsrichtung gegebenen gegenüberliegenden Seiten des Airbags (12) angeordnet sind, und dass diese den Fahrzeuginsassen (14) seitlich einschließende Nebenkammern (13) ausbilden.

10. Airbageinrichtung nach einem der Ansprüche 1 bis 7, **dadurch gekennzeichnet, dass** die Gewebeteile (3) am Beifahrerairbag (1, 12) so angeordnet sind, dass die Nebenkammern (13) innerhalb der Schalttafel ausbildbar sind.

11. Airbageinrichtung nach wenigstens einem der Ansprüche 1 bis 10, **dadurch gekennzeichnet, dass** die dehnbaren Gewebeteile in zumindest einer Anfangsphase der Befüilung in eine vorn Insassen abgewandte Richtung hin dehnbar sind.

12. Airbageinrichtung nach Anspruch 11, **dadurch gekennzeichnet, dass** durch die dehnbaren Gewebeteile ein Lenkradumhüllungspolster erzeugbar ist.

## Claims

1. Airbag device for a motor vehicle having a gas generator and an airbag which can be inflated by the latter and has a main chamber, with extendable, elastic fabric parts being arranged on the airbag to from at least one secondary chamber, said fabric parts, after they have extended, pressing at least part of the gas back into the main chamber as the gas pressure in the airbag drops, **characterized in that** the gas generator is designed as a cold-gas generator (G, K), and **in that** an additional generator (H) which can be triggered chronologically after the cold-gas generator (G, K) is provided in such a manner that during a first filling of the airbag (1, 6, 8, 12), cold-gas is blown from the cold-gas generator (G, K) into the main chamber of the airbag (1, 6, 8, 12), and **in that**, after a vehicle occupant is impacted against the airbag (1, 6, 8, 12), the cold-gas which is forced back into the main chamber of the airbag (1, 6, 8, 12) by the at least one elastically designed secondary chamber (4, 11, 13) keeps the main chamber walls substantially tensioned, so that to fill the airbag (1, 6, 8, 12) for the second time in the event of a secondary collision gas can be blown from the additional generator (H) into the main chamber at a smaller quantity in comparison to the first filling.

2. Airbag device according to Claim 1, **characterized in that** the additional generator (H) is designed as a cold-gas or hot-gas generator.

3. Airbag device according to Claim 1 or Claim 2, **characterized in that** the extendable fabric parts (3, 9) have a coating consisting of a gas-impermeable, elastic material, in particular a rubber coating, on the inside.

4. Airbag device according to one of Claims 1 to 3, **characterized in that** the fabric parts (3, 9) are arranged on overflow openings (2, 10) formed in the airbag.

5. Airbag device according to Claim 4, **characterized in that** the overflow openings (2) are closed by pressure-dependent valves.

6. Airbag device according to Claim 5, **characterized in that** the valves are membranes (5) which can be destroyed by gas at a predetermined pressure.

7. Airbag device, in particular according to one of Claims 1 to 6, **characterized in that**, in the extended, inflated state, the at least one secondary chamber (4, 11, 13) widens the main chamber of the airbag (1, 6, 8, 12) laterally at least in some sections.

8. Airbag device according to one of Claims 1 to 7, **characterized in that** the fabric parts are combined to form an annular fabric layer (9) which runs around symmetrically or asymmetrically at least in some sections and which is connected to the airbag (8) by means of at least one overflow opening (10).

9. Airbag device according to one of Claims 1 to 7, **characterized in that** the front passenger airbag (12) has two fabric parts which are arranged on the opposite side of the airbag (12) provided transversely with respect to the longitudinal direction of the vehicle, and **in that** said fabric parts form secondary chambers (13) which laterally enclose the vehicle occupant (14).

10. Airbag device according to one of Claims 1 to 7, **characterized in that** the fabric parts (3) are arranged on the front passenger airbag (1, 12) in such a manner that the secondary chambers (13) can be formed within the control panel.

11. Airbag device according to at least one of Claims 1 to 10, **characterized in that** the extendable fabric parts can be extended, in at least an initial filling phase, in a direction which faces away from the occupant.

12. Airbag device according to Claim 11, **characterized in that** a steering-wheel covering cushion can be produced by the extendable fabric parts.

## Revendications

1. Dispositif d'airbag pour un véhicule automobile comprenant un générateur de gaz et un airbag gonflable avec celui-ci, comprenant une chambre principale, des parties en tissu élastiques extensibles étant prévues sur l'airbag pour former au moins une chambre secondaire, lesquelles parties repoussent une partie du gaz dans la chambre principale après leur extension, lors de l'abaissement de la pression de gaz dans l'airbag,
**caractérisé en ce que**
le générateur de gaz est réalisé sous la forme d'un générateur de gaz froid (G, K), et **en ce qu'**un générateur supplémentaire (H) pouvant être déclenché dans le temps après le générateur de gaz froid (G, K) est prévu de telle sorte
que lors d'un premier remplissage de l'airbag (1, 6, 8, 12), du gaz froid provenant du générateur de gaz froid (G, K) puisse être introduit dans la chambre principale de l'airbag (1, 6, 8, 12), et
que suite à une collision d'un occupant du véhicule contre l'airbag (1, 6, 8, 12), le gaz froid repoussé dans la chambre principale de l'airbag (1, 6, 8, 12) par l'au moins une chambre secondaire (4, 11, 13) réalisée de manière élastique, maintienne essentiellement tendues les parois de la chambre principale de sorte que pour un deuxième remplissage de l'airbag (1, 6, 8, 12) dans le cas d'une collision secondaire, du gaz puisse être introduit dans la chambre principale depuis le générateur supplémentaire (H) avec une quantité de gaz inférieure par rapport au premier remplissage.

2. Dispositif d'airbag selon la revendication 1, **caractérisé en ce que** le générateur supplémentaire (H) est réalisé sous la forme d'un générateur de gaz froid ou de gaz chaud.

3. Dispositif d'airbag selon la revendication 1 ou la revendication 2, **caractérisé en ce que** les parties en tissu extensibles (3, 9) présentent, du côté intérieur, un revêtement en un matériau élastique imperméable aux gaz, en particulier un revêtement de caoutchouc.

4. Dispositif d'airbag selon l'une quelconque des revendications 1 à 3, **caractérisé en ce que** les parties en tissu (3, 9) sont disposées sur des ouvertures de trop-plein (2, 10) réalisées dans l'airbag.

5. Dispositif d'airbag selon la revendication 4, **caractérisé en ce que** les ouvertures de trop-plein (2) sont fermées par des soupapes dépendant de la pression.

6. Dispositif d'airbag selon la revendication 5, **caractérisé en ce que** les soupapes sont des membranes (5) pouvant être détruites par du gaz à une pression prédéterminée.

7. Dispositif d'airbag, en particulier selon l'une quelconque des revendications 1 à 6, **caractérisé en ce que** l'au moins une chambre secondaire (4, 11, 13) élargit latéralement au moins par portions la chambre principale de l'airbag (1, 6, 8, 12) dans l'état étendu et gonflé.

8. Dispositif d'airbag selon l'une quelconque des revendications 1 à 7, **caractérisé en ce que** les parties en tissu sont assemblées pour former une couche de tissu (9) de forme annulaire périphérique au moins par portions, symétrique ou asymétrique, qui est connectée à l'airbag (8) par au moins une ouverture de trop-plein (10).

9. Dispositif d'airbag selon l'une quelconque des revendications 1 à 7, **caractérisé en ce que** l'airbag du passager (12) présente deux parties en tissu qui sont disposées sur les côtés de l'airbag (12) opposés situés transversalement à la direction longitudinale du véhicule, et **en ce que** celles-ci constituent des chambres secondaires (13) enfermant latéralement les occupants du véhicule (14).

10. Dispositif d'airbag selon l'une quelconque des revendications 1 à 7, **caractérisé en ce que** les parties en tissu (3) sont disposées sur l'airbag passager (1, 12) de telle sorte que les chambres secondaires (13) puissent être constituées à l'intérieur du tableau de bord.

11. Dispositif d'airbag selon l'une quelconque des revendications 1 à 10, **caractérisé en ce que** les parties en tissu extensibles sont extensibles au moins dans une phase de commencement du remplissage dans une direction s'écartant de l'occupant.

12. Dispositif d'airbag selon la revendication 11, **caractérisé en ce que** l'on peut produire un coussin d'enveloppement du volant de direction au moyen des parties en tissu extensibles.
